(19) Europäisches Patentamt
European Patent Office
Office européen des brevets

(11) **EP 3 171 637 A1**

(12) **EUROPEAN PATENT APPLICATION**
published in accordance with Art. 153(4) EPC

(43) Date of publication:
**24.05.2017 Bulletin 2017/21**

(21) Application number: **14881719.0**

(22) Date of filing: **10.11.2014**

(51) Int Cl.:
***H04W 36/30*** *(2009.01)*

(86) International application number:
**PCT/CN2014/090732**

(87) International publication number:
**WO 2015/117439 (13.08.2015 Gazette 2015/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.07.2014 CN 201410348673**

(71) Applicant: **Sanechips Technology Co., Ltd.**
**Nanshan District**
**Shenzhen,**
**Guangdong 518055 (CN)**

(72) Inventor: **LIU, Dali**
**Shenzhen**
**Guangdong 518055 (CN)**

(74) Representative: **Gevers Patents**
**Intellectual Property House**
**Holidaystraat 5**
**1831 Diegem (BE)**

(54) **TRUNKING TERMINAL AND CELL SWITCHING METHOD AND DEVICE THEREFOR, AND COMPUTER STORAGE MEDIUM**

(57) Disclosed are a trunking terminal and a cell switching method and device therefor, and a computer storage medium. The method comprises: a trunking terminal, when in a listening state, acquiring from trunking proprietary system information a cell blacklist in each measurement object; conducting signal measurement on the cells in each measuring object except for the cells on the cell blacklist; and conducting cell switching according to a measurement result, the cell blacklist being used for recording non-trunking cells.

Fig. 1

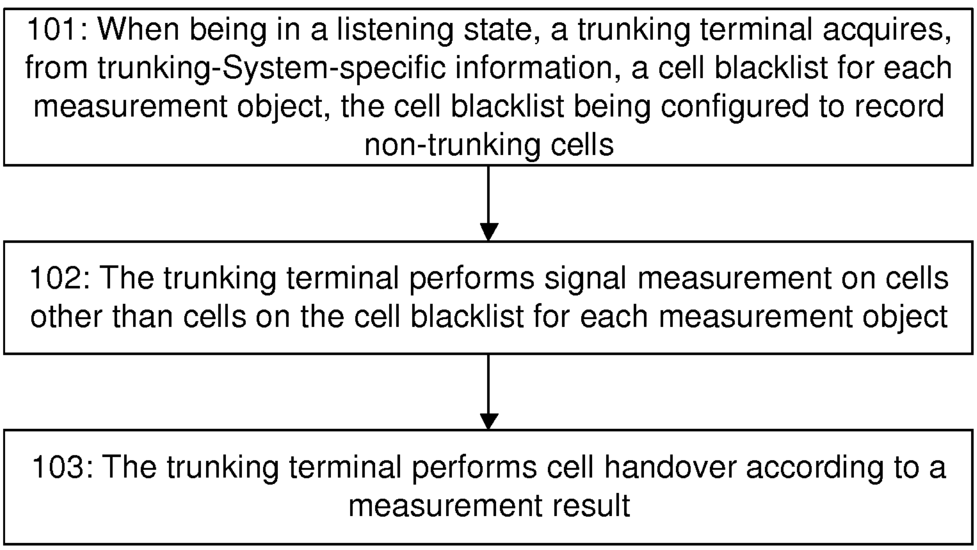


EP 3 171 637 A1

Printed by Jouve, 75001 PARIS (FR)

## Description

## TECHNICAL FIELD

The disclosure relates to a Long-Term Evolution (LTE) technology, and more particularly to a trunking terminal, a cell handover method and device for a trunking terminal, and a computer storage medium.

## BACKGROUND

A trunking communication system is a dedicated wireless communication system developed to meet a commanding and dispatching requirement of a user in the industry and oriented to a specific industrial application, and a large number of wireless users share a small number of wireless channels in the system. The trunking system takes commanding and dispatching as a main application, and is a multipurpose and high-performance wireless communication system. The trunking communication system has particular characteristics of dispatching, group call, rapid call and the like, and has become a development direction of a next-generation trunking system.
An LTE trunking communication system extends and implements various trunking requirements and functions on the basis of an LTE system. In terms of network architecture, an LTE Evolved Packet Core (EPC) and a trunking core network Dispatching Sub-System (DSS) implement complete service isolation, networking of trunking applications is independent from existing LTE EPC equipment and has no influence on normal operation of the existing LTE EPC equipment, and effects of private network isolation and public network sharing may be achieved.
Trunking service's attraction is its rapid contact manner, so that performance of the trunking service is a key factor for whether the trunking service may operate successfully or not. Most important indexes in the performance of the trunking service are voice intelligibility and data reception rate, and a premise for guaranteeing the two is that a trunking terminal must reside in a better cell. In order to implement the premise, the trunking terminal is required to timely identify, through measurement, a better neighbouring cell and be handed over to the neighbouring cell, so that the trunking terminal can reside in the better cell all the time for voice and data services to ensure quality of the services.

## SUMMARY

In order to solve the existing technical problem, embodiments of the disclosure are intended to provide a trunking terminal, a cell handover method and device thereof and a computer storage medium.
The technical solutions of the disclosure are implemented as follows.
An embodiment of the disclosure provides a cell handover method for a trunking terminal, which may include that:

> when being in a listening state, the trunking terminal acquires a cell blacklist for each measurement object from trunking-system-specific information, performs signal measurement on cells other than cells on the cell blacklist for each measurement object, and performs cell handover according to a measurement result, the cell blacklist being configured to record non-trunking cells.

An embodiment of the disclosure provides a cell handover device for a trunking terminal, which may include: a system information module, a measurement module and a handover module, wherein
the system information module may be configured to, when the trunking terminal is in a listening state, acquire a cell blacklist for each measurement object from trunking-system-specific information, the cell blacklist being configured to record non-trunking cells;
the measurement module may be configured to read the cell blacklist, obtained by the system information module, for each measurement object, and perform signal measurement on cells other than cells on the cell blacklist for each measurement object; and
the handover module may be configured to read a measurement result of the measurement module, and perform cell handover according to the measurement result.
An embodiment of the disclosure further provides a trunking terminal, which may include the abovementioned cell handover device.
The embodiments of the disclosure provide the trunking terminal, the cell handover method and device thereof and the computer storage medium. When being in the listening state, the trunking terminal acquires the cell blacklist for each measurement object from the trunking-system-specific information, performs signal measurement on the cells other than the cells on the cell blacklist for each measurement object, and performs cell handover according to the measurement result, the cell blacklist being configured to record the non-trunking cells. Therefore, the trunking terminal is prevented from performing signal measurement on the non-trunking cells when it is in the listening state, handover to the non-trunking cells is further avoided, and continuity of a service is ensured.

## BRIEF DESCRIPTION OF THE DRAWINGS

Fig. 1 is a flowchart of a cell handover method for a trunking terminal according to an embodiment of the disclosure;

Fig. 2 is a structure diagram of a cell handover device for a trunking terminal according to an embodiment of the disclosure; and

Fig. 3 is a structure diagram of a trunking terminal according to an embodiment of the disclosure.

## DETAILED DESCRIPTION

When a trunking terminal is in a serving cell, if the serving cell is a non-trunking LTE ell, the serving cell does not broadcast trunking-system-specific information, and cell residing and all services are implemented according to an existing rule.

When the serving cell of the trunking terminal is a trunking LTE cell, the serving cell broadcasts the trunking-system-specific information, and the trunking terminal receives the trunking-system-specific information. A system information module of the trunking terminal may store the trunking-system-specific information, a measurement module of the trunking terminal does not use the trunking-system-specific information in an idle-state process, the measurement module only uses a related parameter in other system information for configuration when configuring measurement, and an idle-state cell reselection rule also adopts an existing evaluation rule.

In the embodiment of the disclosure, when being in a listening state, a trunking terminal acquires a cell blacklist for each measurement object from trunking-system-specific information, performs signal measurement on cells other than cells on the cell blacklist for each measurement object, and performs cell handover according to a measurement result, the cell blacklist being configured to record non-trunking cells.

The disclosure will be further described below with the drawings and specific embodiments in detail.

The embodiment of the disclosure implements a cell handover method for a trunking terminal, and as shown in Fig. 1, the method includes the following steps.

Step 101: when being in a listening state, the trunking terminal acquires a cell blacklist for each measurement object from trunking-system-specific information, the cell blacklist being configured to record non-trunking cells.

Specifically, the trunking terminal receives the trunking-system-specific information broadcast by a serving cell, the trunking-system-specific information includes the cell blacklist, the cell blacklist is configured to record the non-trunking cells, and when the listening state is monitored, the cell blacklist for each measurement object is read from the trunking-system-specific information.

Step 102: the trunking terminal performs signal measurement on cells other than cells on the cell blacklist for each measurement object.

Specifically, the trunking terminal configures the cell blacklist on its own physical layer, the physical layer excludes the cells on the cell blacklist during signal measurement, signal measurement is performed on the cells other than the cells on the cell blacklist for each measurement object, signal measurement includes: measurement of received signal strength of a cell, measurement of received signal quality of the cell and the like, and each measurement object refers to each receiving frequency point of the trunking terminal.

Step 103: the trunking terminal performs cell handover according to a measurement result.

Specifically, the trunking terminal determines a cell meeting a reselection criterion according to frequency priorities of the cells other than the cells on the cell blacklist and to the measured received signal strength and the measured received signal quality of each cell, and the trunking terminal is handed over to the cell. The reselection criterion includes: a reselection criterion for handover to a cell having a frequency priority higher than a frequency priority of the serving cell, a reselection criterion for handover to a cell having a frequency priority lower than the frequency priority of the serving cell, and a reselection criterion for handover to a cell having a frequency priority equal to the frequency priority of the serving cell. For example, when an LTE trunking terminal is handed over to a cell with an Evolved Universal Mobile Telecommunications System (UMTS) Terrestrial Radio Access Network (E-UTRAN) frequency from the serving cell:

1: the reselection criterion for handover to the cell having the frequency priority higher than the frequency priority of the serving cell is that:

if a lowest signal quality reselection threshold (ThreshServing,LowQ) of the serving cell is provided in a System Information Block 3 (SIB3), a reselection threshold for handover of the trunking terminal to a cell having an E-UTRAN frequency with a priority higher than the frequency priority of the serving cell is:

$$Squal>(ThreshX, HighQ) - GTDeltaTreshHighQ,$$

where Squal represents received signal quality of the serving cell, (ThreshX, HighQ) represents a reselection threshold based on signal quality at the high-priority E-UTRAN frequency, and GTDeltaTreshHighQ represents an reselection threshold based on signal quality at the high-priority E-UTRAN frequency;

if the (ThreshServing,LowQ) is not provided in the SIB3, the reselection threshold for handover of the trunking terminal to the cell having the E-UTRAN frequency with a priority higher than the frequency priority of the serving cell is:

$$Srxlev>(ThreshX, HighP) - GTDeltaTreshHighP,$$

where Srxlev represents received signal strength of the serving cell, (ThreshX, HighP) represents a reselection threshold based on signal strength at the high-priority E-UTRAN frequency, and GTDeltaTreshHighP represents an offset of the reselection threshold based on signal strength at the high-priority E-UTRAN frequency;

2: the reselection criterion for handover to the cell having a frequency priority lower than the frequency priority of the serving cell is that:

if the (ThreshServing,LowQ) is provided in the SIB3, a reselection threshold for handover of the trunking terminal to a cell having an E-UTRAN frequency with a priority lower than the frequency priority of the serving cell is that:

the serving cell meets Squal1 <(ThreshServing,LowQ) and the cell at the E-UTRAN frequency meets Squal2>(ThreshX, LowQ) - GTDeltaTreshLowQ,
where Squal1 represents the received signal quality of the serving cell, Squal2 represents received signal quality of the cell at the E-UTRAN frequency, (ThreshX, LowQ) represents a reselection threshold based on signal quality at the low-priority E-UTRAN frequency, and GTDeltaTreshLowQ represents an offset of reselection threshold based on signal quality;

if the (ThreshServing,LowQ) is not provided in the SIB3, the reselection threshold for handover of the trunking terminal to the cell having the E-UTRAN frequency with a priority lower than the frequency priority of the serving cell is that:

the serving cell meets Srxlev1<(ThreshServing,LowP) and the cell at the E-UTRAN frequency meets Srxlev2>(ThreshX, LowP) - GTDeltaTreshLowP,
where Srxlev1 represents the received signal strength of the serving cell, (ThreshServing,LowP) represents the lowest signal strength reselection threshold of the serving cell, Srxlev2 represents received signal strength of the cell at the E-UTRAN frequency, (ThreshX, LowP) represents a reselection threshold based on signal strength at the low-priority E-UTRAN frequency, and GTDeltaTreshLowP represents an offset of the reselection threshold based on signal strength;

3: the reselection criterion for handover to the cell having a frequency priority equal to the frequency priority of the serving cell is that:

an R value of the serving cell is calculated by adopting the following formula:

$$Rs=(Qmeas,s)+QHyst-GTQHyst,$$

where Rs represents the R value of the serving cell, (Qmeas,s) represents a signal strength value of the serving cell, QHyst represents hysteresis of the R value of the serving cell, and GTQHyst represents an offset of the R value of the serving cell; and

Rs<Rn, where Rn represents an R value of the cell having a frequency priority equal to the frequency priority of the serving cell.

According to the abovementioned reselection criterions, if any one of the abovementioned reselection criterions is met and lasts for a specified time, cell handover is performed, so that it may be ensured that handover to the cell with a higher frequency priority, the cell with an equal frequency priority and the cell with a lower frequency priority is easier to implement, and service continuity of a trunking listening user may be ensured.

Another manner for ensuring the service continuity in the trunking listening state is that:

a listening state handover timer is adopted for monitoring in a process of handover of the trunking terminal to the cell meeting the reselection criterion, and the timer Tlistenhandover is started when handover is started; if handover still fails when the timer Tlistenhandover times out, the cell blacklist is reconfigured to own physical layer, signal measurement is performed again on the cells other than the cells on the cell blacklist for measurement object, and handover to a cell meeting the reselection criterion is performed again; and when the timer Tlistenhandover times out continuously twice and the cells for handover are the same cell, the cell is added into a listening state cell Barred (BAR) list, and cells in the BAR list are not considered during subsequent cell handover.

In order to implement the abovementioned method, the disclosure further provides a cell handover device for a trunking terminal. As shown in Fig. 2, the device includes: a system information module 21, a measurement module 22 and a handover module 23, wherein
the system information module 21 may be implemented by a memory of the trunking terminal, and is configured to, when the trunking terminal is in a listening state, acquire a cell blacklist for each measurement object from trunking-system-specific information, the cell blacklist being configured to record non-trunking cells;
the measurement module 22 may be implemented by an antenna transceiver of the trunking terminal, and is configured to read the cell blacklist, obtained by the system information module 21, for each measurement object, and perform signal measurement on cells other than cells on the cell blacklist for each measurement object;
the handover module 23 may be implemented by a processor of the trunking terminal, and is configured to read a measurement result of the measurement module 22, and perform cell handover according to the measurement result;
the system information module 21 is further configured to receive the trunking-system-specific information broadcast by a serving cell, the trunking-system-specific information including the cell blacklist;
the measurement module 22 is specifically configured to configure the cell blacklist to a physical layer, and perform signal measurement on the cells other than the cells on the cell blacklist for each measurement object through the physical layer, signal measurement including: measurement of received signal strength of a cell, measurement of received signal quality of the cell and the like, and each measurement object refers to each receiving frequency point of the trunking terminal; and
the handover module 23 is specifically configured to determine a cell meeting a reselection criterion according to frequency priorities of the cells other than the cells on the cell blacklist and to the measured received signal strength and the measured received signal quality of each cell, and perform handover to the cell, the reselection criterion including: a reselection criterion for handover to a cell having a frequency priority higher than a frequency priority of the serving cell, a reselection criterion for handover to a cell having a frequency priority lower than the frequency priority of the serving cell, and a reselection criterion for handover to a cell having a frequency priority equal to the frequency priority of the serving cell. For example, when an LTE trunking terminal is handed over to a cell with an E-UTRAN frequency from the serving cell:

1: the reselection criterion for handover to the cell having the frequency priority higher than the frequency priority of the serving cell is that:

if a lowest signal quality reselection threshold (ThreshServing,LowQ) of the serving cell is provided in a System Information Block 3 (SIB3), a reselection threshold for handover of the trunking terminal to a cell at an Evolved Universal Mobile Telecommunications System (UMTS) Terrestrial Radio Access Network (E-UTRAN) frequency with a priority higher than the frequency priority of the serving cell is:

$$\mathrm{Squal} > (\mathrm{ThreshX,\ HighQ}) - \mathrm{GTDeltaTreshHighQ},$$

where Squal represents received signal quality of the serving cell, (ThreshX, HighQ) represents a reselection threshold based on signal quality at the high-priority E-UTRAN frequency, and GTDeltaTreshHighQ represents an offset of the reselection threshold based on signal quality;

if the (ThreshServing,LowQ) is not provided in the SIB3, the reselection threshold for handover of the trunking terminal to the cell having the E-UTRAN frequency with a priority higher than the frequency priority of the serving cell is:

$$Srxlev>(ThreshX,\ HighP) - GTDeltaTreshHighP,$$

where Srxlev represents received signal strength of the serving cell, (ThreshX, HighP) represents a reselection threshold based on signal strength at the high-priority E-UTRAN frequency, and GTDeltaTreshHighP represents an offset of the reselection threshold based on signal strength at the high-priority E-UTRAN;

2: the reselection criterion for handover to the cell having a frequency priority lower than the frequency priority of the serving cell is that:

if the (ThreshServing,LowQ) is provided in the SIB3, a reselection threshold for handover of the trunking terminal to a cell having an E-UTRAN frequency with a priority lower than the frequency priority of the serving cell is that:

the serving cell meets Squal1 <(ThreshServing,LowQ) and the cell at the E-UTRAN frequency meets Squal2>(ThreshX, LowQ) - GTDeltaTreshLowQ,
where Squal1 represents the received signal quality of the serving cell, Squal2 represents received signal quality of the cell at the E-UTRAN frequency, (ThreshX, LowQ) represents a reselection threshold based on signal quality at the low-priority E-UTRAN frequency, and GTDeltaTreshLowQ represents an offset of reselection threshold based on signal quality;

if the (ThreshServing,LowQ) is not provided in the SIB3, a reselection threshold for handover of the trunking terminal to the cell having the E-UTRAN frequency with a priority lower than the frequency priority of the serving cell is that:

the serving cell meets Srxlev1<(ThreshServing,LowP) and the cell at the E-UTRAN frequency meets Srxlev2>(ThreshX, LowP) - GTDeltaTreshLowP,
where Srxlev1 represents the received signal strength of the serving cell, (ThreshServing,LowP) represents the lowest signal strength reselection threshold of the serving cell, Srxlev2 represents received signal strength of the cell at the E-UTRAN frequency, (ThreshX, LowP) represents a reselection threshold based on signal strength at the low-priority E-UTRAN frequency, and GTDeltaTreshLowP represents an offset of the reselection threshold based on signal quality;

3: the reselection criterion for handover to the cell having a frequency priority equal to the frequency priority of the serving cell is that:

an R value of the serving cell is calculated by adopting the following formula:

$$Rs=(Qmeas,s)+QHyst-GTQHyst,$$

where Rs represents the R value of the serving cell, (Qmeas,s) represents a signal strength value of the serving cell, QHyst represents hysteresis of the R value of the serving cell, and GTQHyst represents an offset of the R value of the serving cell; and

Rs<Rn, where Rn represents an R value of the cell having a frequency priority equal to the frequency priority of the serving cell.

The device may further include: a listening state handover timing module 24 configured to start a timer Tlistenhandover when the handover module 23 starts handover, retrigger the system information module 21, the measurement module 22 and the handover module 23 if not receiving a handover success indication of the handover module 23 when the timer Tlistenhandover times out, and when the timer Tlistenhandover times out continuously twice and cells for handover are the same cell, add the cell into a listening state cell BAR list, and cells in the BAR list are not considered during subsequent cell handover of the handover module 23, thereby avoiding the condition that handover fails all the time probably due to disturbance of a wireless signal.

Based on the device, the disclosure further provides a trunking terminal, which may receive trunking-system-specific information broadcast by a serving cell, and as shown in Fig. 3, the trunking terminal includes the abovementioned cell handover device, and a specific structure of the device is as shown in Fig. 2.

The cell handover method for the trunking terminal according to the embodiment of the disclosure may also be stored in a computer-readable storage medium if being implemented in form of software function module and sold or used as an independent product. Based on such understanding, those skilled in the art should know that the embodiment of the disclosure may be provided as a method, a system or a computer program product. Therefore, the disclosure may adopt a form of purely hardware embodiment, purely software embodiment or combined software and hardware embodiment. Moreover, the disclosure may adopt a form of computer program product implemented on one or more computer-available storage media including computer-available program codes, and the storage media include, but not limited to, a U disk, a mobile hard disk, a Read-Only Memory, a disk memory, a Compact Disc Read-Only Memory (CD-ROM), an optical memory and the like.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

Correspondingly, the embodiment of the disclosure further provides a computer storage medium having stored therein computer programs configured to execute a cell handover method for a trunking terminal according to the embodiment of the disclosure.

The above is only the preferred embodiment of the disclosure and not intended to limit the scope of protection of the disclosure, and any modifications, equivalent replacements, improvements and the like made within the spirit and principle of the disclosure shall fall within the scope of protection of the disclosure.

## INDUSTRIAL APPLICABILITY

According to the solutions provided by the embodiment of the disclosure, when being in the listening state, the trunking terminal acquires the cell blacklist which records the non-trunking cells from the trunking-system-specific information, performs signal measurement on the cells other than the cells on the cell blacklist, and performs cell handover according to the measurement result. Therefore, the trunking terminal may be prevented from performing signal measurement on the non-trunking cells in the listening state, handover to the non-trunking cells is further avoided, and continuity of a service is ensured.

## Claims

**1.** A cell handover method for a trunking terminal, comprising:

when being in a listening state, acquiring, by the trunking terminal from trunking-system-specific information, a cell blacklist for each measurement object, performing signal measurement on cells other than cells on the cell blacklist for each measurement object, and performing cell handover according to a measurement result, the cell blacklist being configured to record non-trunking cells.

**2.** The cell handover method according to claim 1, further comprising: before the trunking terminal is in the listening state, receiving the trunking-system-specific information broadcast by a serving cell, the trunking-system-specific information comprising the cell blacklist.

**3.** The cell handover method according to claim 1, wherein performing signal measurement on the cells other than the cells on the cell blacklist for each measurement object comprises: configuring, by the trunking terminal, the cell blacklist on its own physical layer, excluding, by the physical layer, the cells on the cell blacklist during signal measurement, and performing signal measurement on the cells other than the cells on the cell blacklist for each measurement object, the signal measurement comprising:

measurement of received signal strength of a cell and measurement of received signal quality of the; and performing cell handover according to the measurement result comprises: determining, by the trunking terminal, a cell meeting a reselection criterion according to frequency priorities of the cells other than the cells on the cell blacklist and to the measured received signal strength and the measured received signal quality of each cell, and handing over to the determined cell.

**4.** The cell handover method according to claim 3, wherein the reselection criterion comprises: a reselection criterion for handover to a cell having a frequency priority higher than a frequency priority of the serving cell, a reselection criterion for handover to a cell having a frequency priority lower than the frequency priority of the serving cell, and a reselection criterion for handover to a cell having a frequency priority equal to the frequency priority of the serving cell.

**5.** The cell handover method according to claim 4, wherein
the reselection criterion for handover to the cell having the frequency priority higher than the frequency priority of the serving cell is that:

if a lowest signal quality reselection threshold (ThreshServing,LowQ) of the serving cell is provided in a System Information Block 3 (SIB3), a reselection threshold for handover of the trunking terminal to a cell having an Evolved Universal Mobile Telecommunications System (UMTS) Terrestrial Radio Access Network (E-UTRAN) frequency with a priority higher than the frequency priority of the serving cell is:

$$\text{Squal} > (\text{ThreshX, HighQ}) - \text{GTDeltaTreshHighQ},$$

where Squal represents received signal quality of the serving cell, (ThreshX, HighQ) represents a reselection threshold based on signal quality at the high-priority E-UTRAN frequency, and GTDeltaTreshHighQ represents an offset of reselection threshold based on signal quality at the high-priority E-UTRAN frequency;
if the (ThreshServing,LowQ) is not provided in the SIB3, the reselection threshold for handover of the trunking terminal to the cell having the E-UTRAN frequency with a priority higher than the frequency priority of the serving cell is:

$$\text{Srxlev} > (\text{ThreshX, HighP}) - \text{GTDeltaTreshHighP},$$

where Srxlev represents a received signal strength of the serving cell, (ThreshX, HighP) represents a reselection threshold based on signal strength at the high-priority E-UTRAN frequency, and GTDeltaTreshHighP represents an offset of the reselection threshold based on signal strength at the high-priority E-UTRAN frequency;
the reselection criterion for handover to the cell having a frequency priority lower than the frequency priority of the serving cell is that:

if the (ThreshServing,LowQ) is provided in the SIB3, a reselection threshold for handover of the trunking terminal to a cell having an E-UTRAN frequency with a priority lower than the frequency priority of the serving cell is that:

the serving cell meets Squal1 < (ThreshServing,LowQ) and the cell at the E-UTRAN frequency meets Squal2>(ThreshX, LowQ) - GTDeltaTreshLowQ,
where Squal1 represents the received signal quality of the serving cell, Squal2 represents received signal quality of the cell at the E-UTRAN frequency, (ThreshX, LowQ) represents a reselection threshold based on signal quality at the low-priority E-UTRAN frequency, and GTDeltaTreshLowQ represents an offset of the reselection threshold based on signal quality;

if the (ThreshServing,LowQ) is not provided in the SIB3, the reselection threshold for handover of the trunking terminal to the cell having the E-UTRAN frequency with a priority lower than the frequency priority of the serving cell is that:

the serving cell meets Srxlev1<(ThreshServing,LowP) and the cell at the E-UTRAN frequency meets Srxlev2> (ThreshX, LowP) - GTDeltaTreshLowP,
where Srxlev1 represents the received signal strength of the serving cell, (ThreshServing,LowP) represents the lowest signal strength reselection threshold of the serving cell, Srxlev2 represents received signal strength of the cell at the E-UTRAN frequency, (ThreshX, LowP) represents a reselection threshold based on signal strength at the low-priority E-UTRAN frequency, and GTDeltaTreshLowP represents an offset of the reselection threshold based on signal strength at the low-priority E-UTRAN frequency;

the reselection criterion for handover to the cell having a frequency priority equal to the frequency priority of the serving cell is that:

an R value of the serving cell is calculated by adopting the following formula:

$$Rs=(Qmeas,s)+QHyst-GTQHyst,$$

where Rs represents the R value of the serving cell, (Qmeas,s) represents a signal strength value of the serving cell, QHyst represents hysteresis of the R value of the serving cell, and GTQHyst represents an offset of the R value of the serving cell; and
Rs<Rn, where Rn represents an R value of the cell having a frequency priority equal to the frequency priority of the serving cell.

**6.** A cell handover device for a trunking terminal, comprising: a system information module, a measurement module and a handover module,
wherein the system information module is configured to, when the trunking terminal is in a listening state, acquire a cell blacklist for each measurement object from trunking-system-specific information, the cell blacklist being configured to record non-trunking cells;
the measurement module is configured to read the cell blacklist, obtained by the system information module, for each measurement object, and perform signal measurement on cells other than cells on the cell blacklist for each measurement object;
the handover module is configured to read a measurement result of the measurement module, and perform cell handover according to the measurement result.

**7.** The cell handover device according to claim 6, wherein the system information module is further configured to receive the trunking-system-specific information broadcast by a serving cell, the trunking-system-specific information comprising the cell blacklist.

**8.** The cell handover device according to claim 6, wherein the measurement module is configured to configure the cell blacklist to a physical layer, and perform signal measurement on the cells other than the cells on the cell blacklist for each measurement object through the physical layer, the signal measurement comprising: measurement of received signal strength of a cell and measurement of received signal quality of the cell; and
the handover module is configured to determine a cell meeting a reselection criterion according to frequency priorities of the cells other than the cells on the cell blacklist and to the measured received signal strength and the measured received signal quality of each cell, and perform handover to the determined cell.

**9.** The cell handover device according to claim 6, further comprising: a listening state handover timing module configured to start a timer when the handover module starts handover, retrigger the system information module, the measurement module and the handover module if not receiving a handover success indication from the handover module when the timer times out, and when the timer times out continuously twice and cells for handover are the same cell, add the cell into a listening state cell barred list.

**10.** A trunking terminal, comprising the cell handover device according to any one of claims 6-9.

**11.** A computer storage medium having stored therein computer programs configured to execute the cell handover method for a trunking terminal according to any one of claims 1-5.

Fig. 1

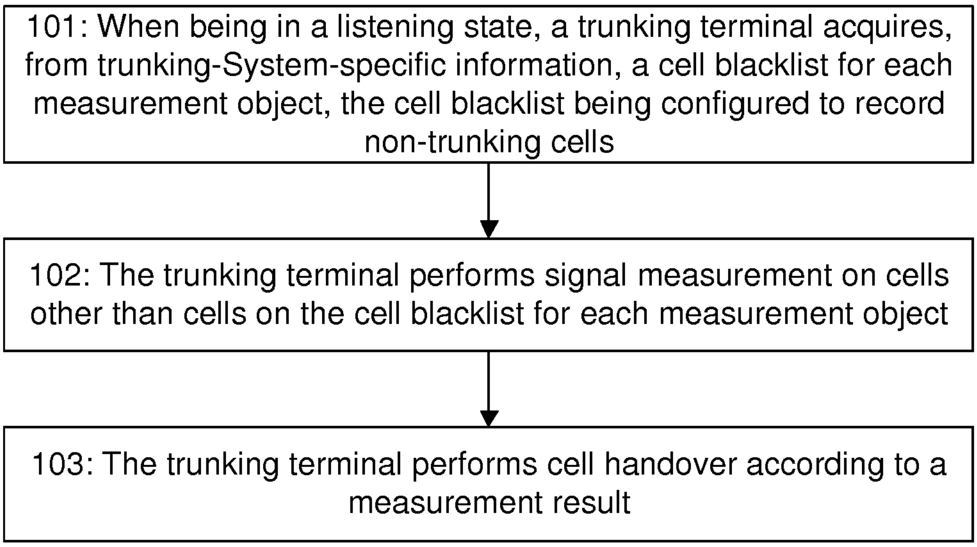
101: When being in a listening state, a trunking terminal acquires, from trunking-System-specific information, a cell blacklist for each measurement object, the cell blacklist being configured to record non-trunking cells
102: The trunking terminal performs signal measurement on cells other than cells on the cell blacklist for each measurement object
103: The trunking terminal performs cell handover according to a measurement result

Fig. 2

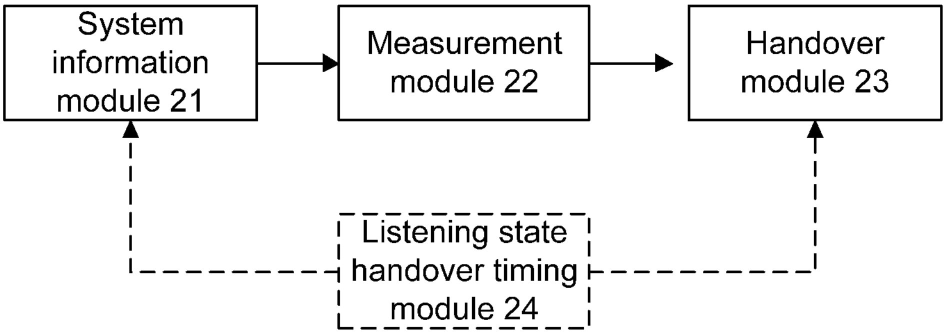
System information module 21
Measurement module 22
Handover module 23
Listening state handover timing module 24

Fig. 3

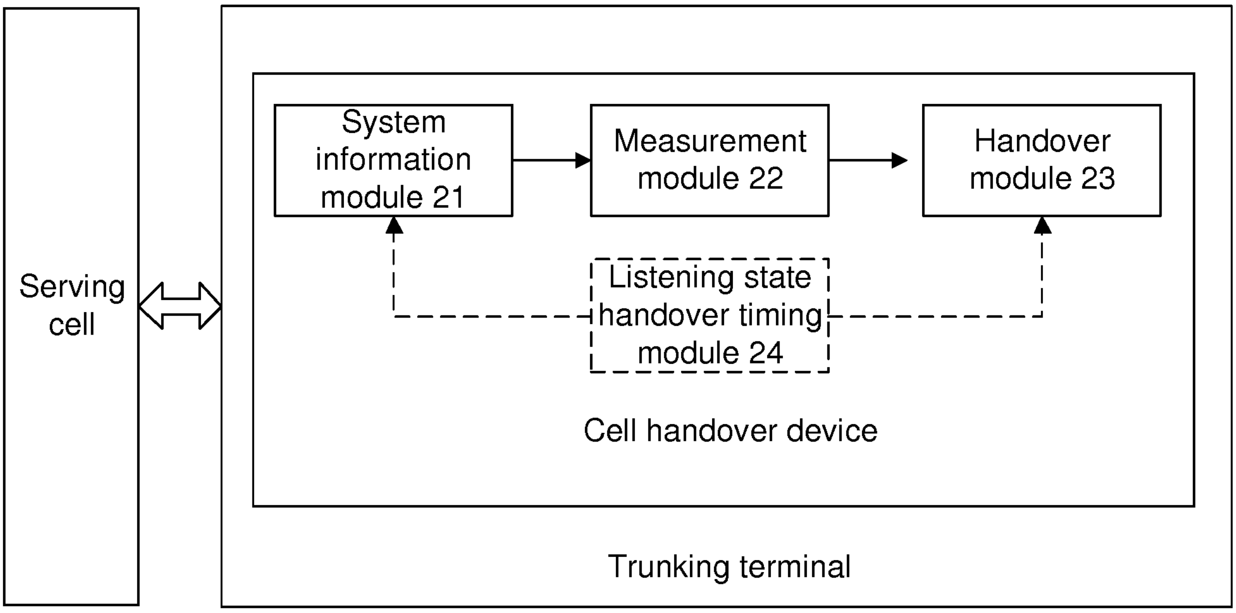
Serving cell
System information module 21
Measurement module 22
Handover module 23
Listening state handover timing module 24
Cell handover device
Trunking terminal

# INTERNATIONAL SEARCH REPORT

International application No.
**PCT/CN2014/090732**

## A. CLASSIFICATION OF SUBJECT MATTER

H04W 36/30 (2009.01) i

According to International Patent Classification (IPC) or to both national classification and IPC

## B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CPRSABS, CNKI, CNTXT, DWPI, VEN: black list, group, non-group, communication, cell, handover, black, list, measur+

## C. DOCUMENTS CONSIDERED TO BE RELEVANT

| Category* | Citation of document, with indication, where appropriate, of the relevant passages | Relevant to claim No. |
|---|---|---|
| Y | CN 103052036 A (ZTE CORP.), 17 April 2013 (17.04.2013), see description, paragraphs [0002], [0005], [0006], [0031] and [0041] | 1-2, 6-7, 10-11 |
| A | CN 103052036 A (ZTE CORP.), 17 April 2013 (17.04.2013), see description, paragraphs [0002], [0005], [0006], [0031] and [0041] | 3-5, 8-9 |
| Y | CN 1610419 A (HUAWEI TECHNOLOGIES CO., LTD.), 27 April 2005 (27.04.2005), claim 1 | 1-2, 6-7, 10-11 |
| A | CN 1610419 A (HUAWEI TECHNOLOGIES CO., LTD.), 27 April 2005 (27.04.2005), claim 1 | 3-5, 8-9 |
| A | CN 103167423 A (TD TECH LTD.), 19 June 2013 (19.06.2013), the whole document | 1-11 |

☐ Further documents are listed in the continuation of Box C. ☒ See patent family annex.

* Special categories of cited documents:

“A” document defining the general state of the art which is not considered to be of particular relevance

“E” earlier application or patent but published on or after the international filing date

“L” document which may throw doubts on priority claim(s) or which is cited to establish the publication date of another citation or other special reason (as specified)

“O” document referring to an oral disclosure, use, exhibition or other means

“P” document published prior to the international filing date but later than the priority date claimed

“T” later document published after the international filing date or priority date and not in conflict with the application but cited to understand the principle or theory underlying the invention

“X” document of particular relevance; the claimed invention cannot be considered novel or cannot be considered to involve an inventive step when the document is taken alone

“Y” document of particular relevance; the claimed invention cannot be considered to involve an inventive step when the document is combined with one or more other such documents, such combination being obvious to a person skilled in the art

“&” document member of the same patent family

| Date of the actual completion of the international search | Date of mailing of the international search report |
|---|---|
| 10 April 2015 (10.04.2015) | **29 April 2015 (29.04.2015)** |

Name and mailing address of the ISA/CN:
State Intellectual Property Office of the P. R. China
No. 6, Xitucheng Road, Jimenqiao
Haidian District, Beijing 100088, China
Facsimile No.: (86-10) 62019451

Authorized officer
**LI, Xiaoqian**
Telephone No.: (86-10) **62089456**

Form PCT/ISA/210 (second sheet) (July 2009)

# INTERNATIONAL SEARCH REPORT
Information on patent family members

International application No.
**PCT/CN2014/090732**

| Patent Documents referred in the Report | Publication Date | Patent Family | Publication Date |
|---|---|---|---|
| CN 103052036 A | 17 April 2013 | WO 2014101470 A1 | 03 July 2014 |
| CN 1610419 A | 27 April 2005 | CN 100358370 C | 26 December 2007 |
| | | WP 2005039208 A1 | 28 April 2005 |
| CN 103167423 A | 19 June 2013 | None | |

Form PCT/ISA/210 (patent family annex) (July 2009)